# EUROPEAN PATENT SPECIFICATION

(11) **EP 2 209 363 B1**
(45) Date of publication and mention of the grant of the patent: **06.04.2011**
(21) Application number: 07819702.7
(22) Date of filing: 08.11.2007
(51) Int. Cl.: A01G 1/00

(54) **PLANT TRAY AND PANEL**
PFLANZENKASTEN UND PFLANZENPANEL
PLATEAU ET PANNEAU VÉGÉTAUX

(43) Date of publication of application: 28.07.2010
(73) Proprietor: Ruiz Caballero, Francisco, Eugenio Salazar, 23 28002 Madrid (ES)
(72) Inventor: Ruiz Caballero, Francisco, Eugenio Salazar, 23 28002 Madrid (ES)
(74) Representative: Mato Adrover, Ángel Luis
(86) International application number: PCT/EP2007/009695
(87) International publication number: WO 2009/059620

(56) References cited:
- WO-A-02/085722
- DE-A1- 19 654 049
- US-A1- 2002 007 592
- US-A1- 2007 094 927

## Description

### OBJECT OF THE INVENTION

The present invention refers to a tray on which a plant panel is constituted and the procedure for covering surfaces with these panels.

### BACKGROUND TO THE INVENTION

Various plant panels for covering building facades are known such as for example, patent JP7059468 which describes a plant cultivation tray for covering buildings with holes in the main surface placed in zigzag fashion with a piped irrigation system.

It is also known from the state of the art A modular green roof system as the one disclosed in US2002007592 A1, which includes modular panels providing a surrounded space suitable for supporting live plant growth and adapted for installing onto a roof deck in side-by-side positioning while allowing water flow on the roof thereunder. The panels are filled with growing medium and pre-seeded prior to delivery to the roof site, and delivered in either a preserved condition or a germinated condition. The panels are adapted for interconnecting to adjacent panels, and for connection to an edge finishing/edge termination system and support structure to enable provision of non-panel areas of the green roof, and above-panel structures.

### DESCRIPTION OF THE INVENTION

The problem resolved with the present invention is that of developing a tray and a plant panel which will enable irrigation and maintenance thereof in a vertical surface or one inclined at any angle, and, in addition, providing or improving heat insulation.

The solution is based on the special constitution of the elements and the arrangement of various plant panels on the building.

An initial aspect of the invention is concerned with a plant panel for covering surfaces and in particular surfaces of buildings including both façades and roofs which form in section a C shaped structure made from a single folded piece.

The tray, which will be filled with various layers including among others substrate in order to enable plants to be planted in them has a perforated main surface. Two of the sides of the tray are also perforated so that water can pass from one tray to another for irrigation purposes.

The two remaining sides are not perforated and are extended in perpendicular flaps in respect of those sides in order to join it to the wall or a panel.

The tray is also provided with two smaller flaps continuing from the perforated sides in order to provide the tray with greater resistance.

A second aspect of the invention refers to a procedure for composing the tray described.

The tray is composed on the basis of a plate from which at least two trays are obtained holes are then made in what will become the main surface and in the two sides, the sheet is cut according to the composition of the tray and it is folded.

A third aspect of the invention refers to a plant panel constituted on the basis of the tray which has been filled with various layers.

The first layer is a material which permits the absorption and transfer of water and this material is placed against the interior of the main perforated surface, and a layer of porous and light substrate is subsequently placed on top of this.

A polystyrene sheet is placed on the full tray in the area closest to the surface to be covered.

The substrate where the plants are to be planted includes pieces of plating in order to prevent the substrate from compacting and moving when it is placed on an inclined or vertical surface.

A fourth aspect of the invention concerns a procedure for installing plant panels which includes the following steps.

Sowing in the panels in horizontal until both the shoots and the roots of the plants have developed vertically and until the shoots exceed the surface of the panel by at least 2 cm.

Inclination of the panels to the angle they will be set at on the surface to be covered.

Fixing the panels in rows directly on the surface to be covered or in a metal structure joined thereto.

If the panels are installed on an inclined roof they are placed side by side with the possibility of light porous concrete slabs being interposed between them of the same size as the panels to permit movement on the sloping roof.

A fifth aspect of the invention refers to an irrigation system for the panels by means of a closed circuit of porous piping which rises from a pump situated in the lower part of the panels up to the upper part of the highest row of panels installed, descending in an S shape between two rows of panels to the final row situated on the lowest part of the installation, the water penetrates the panels through holes and wets the substrate, the felt or rock wool, and the excess water which reaches the lower part through gravity is collected in a gutter and transported to the tank which is provided with a pump, and also with a minimum water level device connected to the network in order to replace the water consumed.

A surface finished with this plant panel ensures comfort due to the heat and sound insulation provided. As the insulation is on the exterior the possibility of thermal bridges in internal partitions or structural supports is eliminated.

### DESCRIPTION OF THE DRAWINGS

The present descriptive report is complemented by a set of plans illustrating a preferred embodiment of the invention but which is in no way restrictive.
Figure 1 shows a raised view of the sheeting from which the six trays are to be composed.
Figure 2 shows a perspective view of the tray in this invention.
Figure 3 shows a V shaped plant panel for resolving corner joins.
Figure 4 shows a special Y shaped plant panel for resolving corner joins.

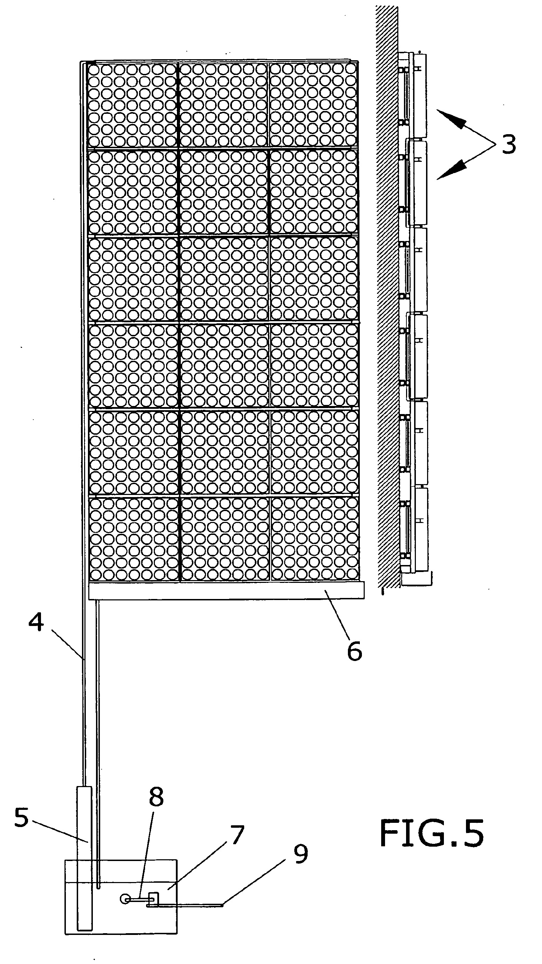

Figure 5 shows a front view and a side view of a panel installation indicating the irrigation system.

### PREFERRED EMBODIMENT OF THE INVENTION

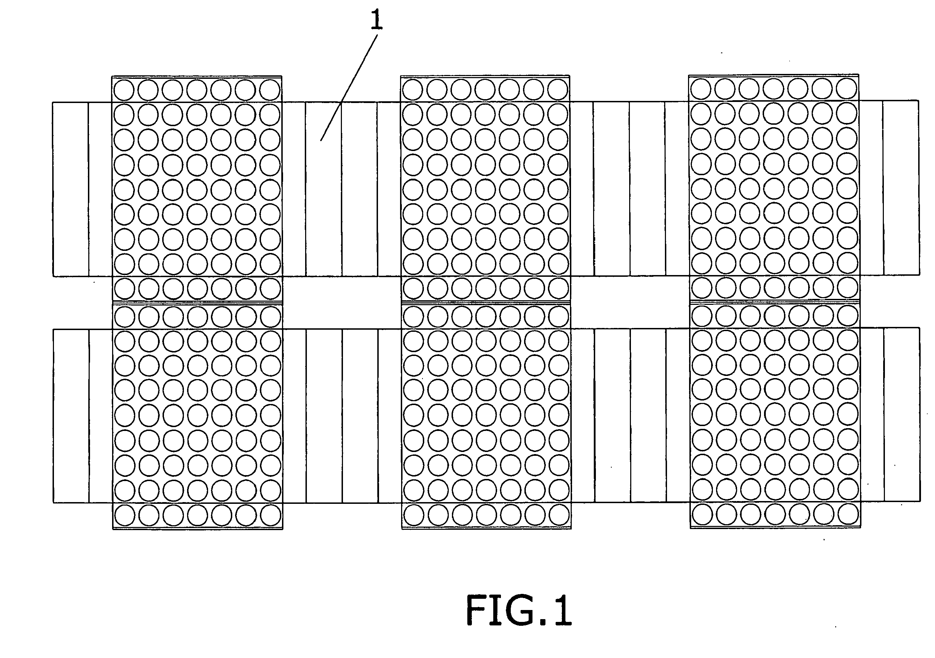

In an example of a preferred embodiment the trays are formed from a flat sheet (1) as shown in figure 1. In this example of an embodiment based on a sheet (1) holes are made therein and it is cut and folded to obtain six trays.

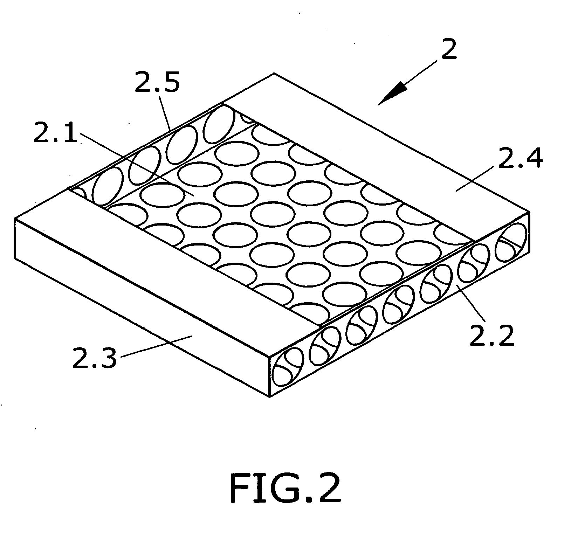

Figure 2 shows the tray (2) in perspective showing the base (2.1) which corresponds to the perforated surface which will be on the external part of the tray, two sides (2.2) with the perforated surface corresponding to the upper and lower sides; two side areas (2.3) with the imperforated surface which corresponds to the left or right sides of the panel; two large base flaps (2.4) continuing from the imperforated sides and two base flaps (2.5) extending from the perforated sides in order to provide the tray with greater resistance.

In order to form the plant panel (3) various layers are added which include:
- A felt lining for the interior of the tray (2) covering all the holes. When it is necessary to increase sound and heat resistance of the closure, a layer of mineral wool is used instead of felt.
- A light and porous substrate, formed from coconut fibre, organic material and expanded sand in appropriate proportions, with intercalated pieces of sheeting to prevent compacting. The substrate is extremely thick in order to lay it with the felt. or it may be small when installed with mineral wool. The properties of absorption and transmissibility encourage irrigation water to be spread throughout the substrate reaching all the plant roots.
- Finally, an extruded polythene sheet is placed with a thickness required to ensure the heat insulation necessary for compliance with the energy saving regulations which vary according to country.

In an example of an embodiment of the panels (3) it is possible to install directly on the waterproofing material of a sloping roof.

The panel (3) supports the sheet of soft polystyrene on the impermeable membrane, protecting it and the versatility of the thicknesses of this insulating layer enables compliance with energy saving regulations adapting to the requirements of buildings.

The surface of the tray (2) is smaller than the extruded polystyrene and therefore when they are placed together, polystyrene against polystyrene, it is possible to avoid undesirable distortions produced by any heat dilation of the metal trays (2) and thermal bridges.

As the insulation is carried out on the exterior the possibility of thermal bridges in flooring slabs or internal partitions is eliminated.

When the panel is to be installed on a wall or a metal structure, two horizontal profiles are backed to the polystyrene sheet in the back part joined to the tray, through the polystyrene sheet in order to join them to the profiles present in the surface to be covered.

Rows of profiles are fixed to the wall or to the metal structure at the appropriate distance on which the panels will be hung. With a structure formed with appropriate steel profiles, fixed to the edges of the building structural supports, it is possible to form the external closure with the plant panels and by lining a prefabricated wall of plaster, wood or any other element, it forms the internal enclosure of each plant.

Watering of the panels is indicated in figure five which shows a front and lateral view of panels, and is carried out by means of a closed circuit of porous piping (4) which rises from a pump (5) situated on the lower part of the panels up to the upper part of the row of panels installed at the top, descending in an S shape between two rows of panels, up to the last row situated on the lowest part of the installation. The water penetrates the panels through the holes and wets the substrate, the felt or rock wool providing the humidity required by the plants. The excess water which reaches the lower part by gravity is collected in a gutter (6) and carried to the tank (7) where the pump (5) is installed. This is fitted with a minimum water level (9) connected to the network (10) in order to replace the water consumed. In addition to consuming less water than normal, this closed circuit procedure serves to dissolve nutrients and to fertilise the substrate of the panels, should the soil deteriorate in quality over time.

An example of an embodiment may be the covering of a stairwell, and the insulating virtues of this plant wall may be appreciated.

When it is installed on a metal structure with the plant panels on the outside, the internal finish of the closure may be made with any laminar element: wood planks, plaster sheets etc. The air chamber in the interior is not ventilated but it is closed both at the sides and on the upper and lower sides with fringes of extruded polystyrene in order to prevent air circulation, thus ensuring efficient insulation. The flooring of the ground floor and the building roof which, like the intermediate floors, are covered by the plant enclosure, thus eliminating thermal bridges.

An example of an embodiment is the lateral finish of a plant wall installed on a continuous wall, may be a wood corner.

A fringe of extruded polystyrene closes the side in order to prevent air circulation and the watering circuit which in this case has been arranged on the vertical part in the groove formed by the wooden corner

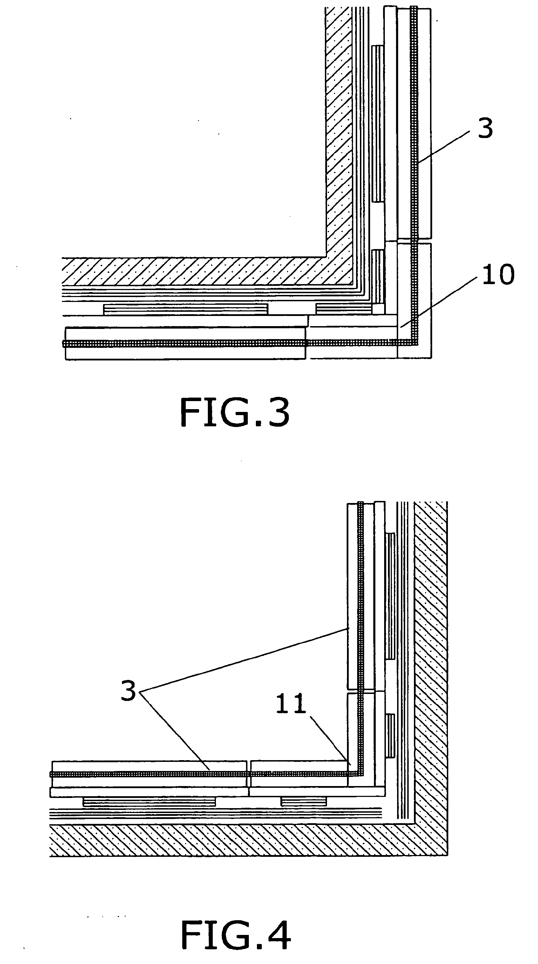

Figure 3 shows a special plant panel (V)(10) in order to resolve the corner join of plant walls, the measurements of which are not multiples of the width of the normal panel (3) and as a result the edge of the panel of a wall does not join up with the edge of the other. This part (V) (10) will be the final part placed on the panel rows.

Figure 4 shows a special plant panel (V)(11) in order to resolve the corner join of plant walls, the measurements of which are not multiple of the width of the normal panel (3) and as a result the edge of the wall panel does not join up with the edge of the other. This part (V) (11) will be the final part placed on the panel rows.

The panels (3) are easily sown in an automatic installation, placing them horizontally until the moment of placing them in their final location, which enables the panels (3) to be installed in the building with the plants already grown.

In the plants' growing stage the sowing devices penetrate the visible part of the panels (3) until they reach the substrate where the seeds have been sown. Firstly, both the roots and the shoots grow in vertical, in the panel (3) arranged in horizontal position and they are maintained in this manner until sufficient time has passed for the shoots to exceed the panel surface by two or three cm. The panels are then inclined to the angle they will have when fitted on the building: inclined on the slope of the roof or totally vertical in the case of a wall. From this moment the shoots and the roots develop vertically with respect to the surface of the Earth and thus they root better in the substrate and reinforce it. In addition, as the shoots develop the planted surface of the panels increases and fills the whole façade.

This procedure uses all kinds of plants which are selected based on the orientation of the enclosure and the climate of the area where the building is sited.

The essential nature of this invention is not altered by any variations in materials, form, size and arrangement of its component elements, described in a non-restrictive manner, with this being sufficient to proceed to its reproduction by an expert.

## Claims

1. Plant tray (2) for covering surfaces, of the type with a main perforated outer surface (2.1) and two sides (2.2) also perforated, for the passage of water **characterised in that** it comprises a C shaped section based on a single folded piece and with two non-perforated laterals (2.3) which extend into perpendicular flaps (2.4) with respect to those sides in order to join them to the wall or to a panel and two smaller flaps (2.5)continuing from the perforated sides in order to provide the tray (2) with greater resistance.

2. Procedure for constitution of the tray (2) according to claim 1 **characterised in that** it is based on a sheet (1) from which at least two trays (2) are obtained, in which holes are made in the part which will present the main surface (2.1) and also in two sides (2.2) the sheet is cut according to the composition of the tray (2) and is folded.

3. Plant panel (3) **characterised in that** in the tray (2) according to claim 1 the following elements are placed:
a material which permits absorption and transmission of water, this material is affixed to the interior of the main perforated surface.
a porous and light substrate and
a polystyrene sheet in the area closes to the surface to be covered

4. Panel (3) according to claim 3 **characterised in that** the material which absorbs and transmits the water is felt.

5. Panel (3) according to claim 3 **characterised in that** the material which absorbs and transmits the water is mineral wool.

6. Panel (3) according to claim 3 **characterised in that** the substrate is coconut fibre, organic material and expanded sand.

7. Panel (3) according to claim 3 **characterised in that** the substrate includes pieces of tin plate to avoid compacting of the substrate.

8. Panel (3) according to claim 3 **characterised in that** it presents profiles at the back part which are joined to the tray, by means of the polystyrene sheet to be joined to profiles present in the surface to be covered.

9. Procedure for installing panels (3) according to claims 3 to 8 **characterised in that** it comprises the following steps:
sowing of the panels (3) in horizontal until both the shoots and the roots of the plants have developed vertically and until the shoots exceed the surface of the panel by at least 2 cm;
inclination of the panels to the angle they will be set at in the surface to be covered;
fixing the panels in rows directly on the surface to be covered or in a metal structure joined thereto.

10. Procedure according to claim 9 **characterised in that** the metal structure joined to the surface to be covered is formed by steel profiles fixed to the corners of the floors of the building.

11. Procedure according to claims 9 and 10 **characterised in that** a prefabricated wall is lined on the surface to be covered where the plant panels (3) are fitted to form an internal enclosure, and the sides of the covered surface are closed with extruded polystyrene to ensure insulation.

12. Procedure according to claim 11 **characterised in that** the group of panels (3) is finished with corners.

13. Procedure according to claims 9 to 12 **characterised in that** when corners of buildings need to be covered V shaped panels (10) are used and which are fitted following positioning of all the rows.

14. Procedure according to claims 9 to 12 **characterised in that** where corners of buildings meet and need to be covered Y shaped panels (11) are used and which are fitted following positioning of the first of the rows.

15. Procedure according to claim 9 **characterised in that** an irrigation system is installed for the panels by means of a closed circuit of porous piping (4) which rises from a pump (5) in the lower part of the panels up to highest row of panels installed, descending in an S shape between two rows of panels until the final row situated on the lowest part of the installation, the water penetrates the panels through holes and wets the substrate, the felt or rock wool; the excess water which through gravity reaches the lower part is collected in a gutter and transported to the tank which is provided with a pump, and also with a minimum water level device connected to the network in order to replace the water consumed.

## Patentansprüche

1. Pflanzenbehälter (2) zur Oberflächenbedeckung, der Art, welche eine perforierte Hauptaußenfläche (2.1) und zwei ebenso perforierte Seiten (2.2) für den Durchlauf von Wasser aufweist, **dadurch gekennzeichnet, dass** er einen auf ein einziges gefaltetes Stück basierten C-förmigen Abschnitt umfasst und mit zwei nicht perforierten Seiten (2.3) welche sich in rechtwinkligen Klappen (2.4) in Bezug auf diese Seiten erstrecken, um diese an die Wand oder an eine Platte zu verbinden und zwei kleineren Klappen (2.5) welche sich von den perforierten Seiten fortsetzen, um dem Behälter (2) eine höhere Festigkeit zu verleihen.

2. Verfahren zur Herstellung des Behälters (2) nach Anspruch 1, **dadurch gekennzeichnet, dass** es auf eine Folie (1) basiert, aus welcher zumindest zwei Behälter (2) erhalten werden, in welche Löcher gemacht werden, im Teil, der die Hauptfläche (2.1) aufweisen wird und auch in zwei Seiten (2.2), die Folie wird geschnitten gemäß der Komposition des Behälters (2) und wird gefaltet.

3. Platte (3) für Pflanzen, **dadurch gekennzeichnet, dass** in dem Behälter (2) nach Anspruch 1 folgende Elemente angebracht werden:
ein Material, das die Absorption und Übertragung von Wasser ermöglicht, dieses Material ist an der Innenseite der perforierten Hauptfläche befestigt;
ein poröses und leichtes Substrat und
eine Polystyrolfolie im Bereich, der sich näher an der zu bedeckenden Oberfläche befindet.

4. Platte (3) nach Anspruch 3, **dadurch gekennzeichnet, dass** das Material, welches das Wasser absorbiert und überträgt Filz ist.

5. Platte (3) nach Anspruch 3, **dadurch gekennzeichnet, dass** das Material, welches das Wasser absorbiert und überträgt Mineralwolle ist.

6. Platte (3) nach Anspruch 3, **dadurch gekennzeichnet, dass** das Substrat Kokosfaser, organisches Material und expandierter Sand ist.

7. Platte (3) nach Anspruch 3, **dadurch gekennzeichnet, dass** das Substrat Weißblechstücke beinhaltet, um die Verdichtung des Substrats zu verhindern.

8. Platte (3) nach Anspruch 3, **dadurch gekennzeichnet, dass** sie Profile am Hinterteil aufweist, welche an dem Behälter verbunden sind, mittels der Polystyrolfolie, welche an an der zu bedeckenden Oberfläche vorhandenen Profilen zu verbinden sind.

9. Verfahren zur Installation von Platten (3) nach den Ansprüchen 3 bis 8, **dadurch gekennzeichnet, dass** es folgende Schritte umfasst:
Säen der Platten (3) in Horizontal bis sowohl die Sprossen als auch die Wurzeln der Pflanzen sich vertikal entwickelt haben und bis die Sprossen die Oberfläche der Platte zumindest 2 cm überschritten haben;
Neigen der Platten mit dem Winkel mit welchem sie in der zu bedeckenden Oberfläche angebracht werden;
Befestigen der Platten in Reihen unmittelbar auf die zu bedeckende Oberfläche oder in einer an dieser verbundenen Metallstruktur.

10. Verfahren nach Anspruch 9, **dadurch gekennzeichnet, dass** die an die zu bedeckende Oberfläche verbundene Metallstruktur aus Stahlprofilen gebildet ist, welche an die Etagenecken des Gebäudes befestigt sind.

11. Verfahren nach den Ansprüchen 9 und 10, **dadurch gekennzeichnet, dass** eine vorgefertigte Wand über die zu bedeckende Oberfläche ausgekleidet wird, in der die Platten (3) für Pflanzen angeordnet werden um ein inneres Gehäuse zu bilden, und die Seiten der bedeckten Oberfläche werden mit extrudiertem Polystyrol geschlossen, um eine Isolierung zu gewährleisten.

12. Verfahren nach Anspruch 11, **dadurch gekennzeichnet, dass** die Gruppe von Platten (3) mit Ecken gefertigt wird.

13. Verfahren nach den Ansprüchen 9 bis 12, **dadurch gekennzeichnet, dass** falls es nötig ist, die Ecken von Gebäuden zu bedecken, V-förmige Platten (10) verwendet werden und welche nach der Positionierung aller Reihen angeordnet werden.

14. Verfahren nach den Ansprüchen 9 bis 12, **dadurch gekennzeichnet, dass** wo sich Ecken von Gebäuden treffen und es nötig ist, diese zu bedecken, Y-förmige Platten (11) verwendet werden und welche nach der Positionierung der ersten Reihe angeordnet werden.

15. Verfahren nach Anspruch 9, **dadurch gekennzeichnet, dass** für die Platten ein Bewässerungssystem angebracht wird, mittels einem geschlossenen Kreislauf aus einer porösen Rohrleitung (4) welche von einer Pumpe (5) aus in dem unteren Teil der Platten bis zur höchsten angeordneten Reihe von Platten aufsteigt, welche S-förmig zwischen zwei Reihen von Platten absteigt bis zur letzten Reihe, welche sich auf den untersten Teil der Installation befindet, das Wasser durchdringt die Platten durch die Löcher und macht das Substrat, den Filz oder die Steinwolle nass; das überschüssige Wasser, welches durch die Schwerkraft den unteren Teil erreicht, wird in einer Rinne gesammelt und zu einem Tank transportiert, welcher mit einer Pumpe versehen ist, und auch mit einer Vorrichtung für das minimale Wasserniveau, welche mit dem Netz angeschlossen ist, um das verbrauchte Wasser zu ersetzen.

## Revendications

1. Plateau pour plantes (2) pour couvrir des surfaces, du type ayant une surface principale extérieure perforée (2.1) et deux côtés (2.2) également perforés, pour le passage de l'eau, **caractérisé en ce qu'**il comprend une section sous forme de C basée sur une seule pièce pliée et avec deux latéraux non-perforés (2.3) qui s'étendent à l'intérieur de volets perpendiculaires (2.1) par rapport à ces côtés afin de les unir à la paroi ou à un panneau et deux volets plus petits (2.5) continuant depuis les côtés perforés afin de fournir au plateau une résistance accrue.

2. Procédé pour la constitution du plateau (2) selon la revendication 1, **caractérisé en ce qu'**il est basé sur une feuille (1) à partir de laquelle on obtient au moins deux plateaux (2), dans laquelle on réalise des trous dans la partie qui présentera la surface principale (2.1) et également dans deux côtés (2.2) la feuille est coupée selon la composition de la caissette (2) et elle est pliée.

3. Panneau pour plantes (3) **caractérisé en ce que** dans le plateau (2) selon la revendication 1 les éléments suivants sont mis en place:
une matière qui permet l'absorption et la transmission d'eau, cette matière est fixée à l'intérieur de la surface principale perforée ;
un substrat poreux et léger et
une feuille en polystyrène dans la zone proche de la surface à couvrir.

4. Panneau (3) selon la revendication 3, **caractérisé en ce que** la matière qui absorbe et transmet l'eau est du feutre.

5. Panneau (3) selon la revendication 3, **caractérisé en ce que** la matière qui absorbe et transmet l'eau est de la laine minérale.

6. Panneau (3) selon la revendication 3, **caractérisé en ce que** le substrat est de la fibre de noix de coco, de la matière organique et du sable expansé.

7. Panneau (3) selon la revendication 3, **caractérisé en ce que** le substrat comprend des pièces en fer blanc pour éviter le compactage du substrat.

8. Panneau (3) selon la revendication 3, **caractérisé en ce qu'**il présente des profils au niveau de la partie postérieure qui sont unis au plateau, au moyen de la feuille en polystyrène à unir aux profils présents sur la surface à couvrir.

9. Procédé d'installation de panneaux (3) selon les revendications 3 à 8, **caractérisé en ce qu'**il comprend les étapes suivantes:
ensemencement des panneaux (3) horizontalement jusqu'à ce que les pousses et les racines des plantes se soient développés verticalement et jusqu'à ce que les pousses dépassent la surface du panneau d'au moins 2 cm;
inclinaison des panneaux à l'angle qu'ils formeront avec la surface à couvrir;
fixation des panneaux par rangées directement sur la surface à couvrir ou sur une structure métallique unie à celle-ci.

10. Procédé selon la revendication 9, **caractérisé en ce que** la structure métallique unie à la surface à couvrir est formée de profils en acier fixés aux angles des étages du bâtiment.

11. Procédé selon les revendications 9 et 10, **caractérisé en ce qu'**une paroi préfabriquée est revêtue sur la surface à couvrir où les panneaux pour plantes (3) sont ajustés pour former une enceinte interne, et les côtés de la surface couverte son fermés avec du polystyrène extrudé pour assurer l'isolement.

12. Procédé selon la revendication 11, **caractérisé en ce que** le groupe de panneaux (3) se termine avec des angles.

13. Procédé selon les revendications 9 à 12, **caractérisé en ce que** lorsque les angles des bâtiments doivent être recouverts, on utilise de panneaux (10) sous forme de V qui sont ajustés suivant le positionnement de toutes les rangées.

14. Procédé selon les revendications 9 à 12, **caractérisé en ce que** là où les angles des bâtiments se rencontrent et doivent être couverts on utilise de panneaux (11) sous forme de Y et ceux-ci sont ajustés suivant le positionnement de la première rangée.

15. Procédé selon la revendication 9, **caractérisé en ce qu'**un système d'irrigation est installé pour les panneaux au moyen d'un circuit fermé de tuyauterie poreuse (4) qui monte depuis une pompe (5) dans la partie inférieure des panneaux jusqu'à la rangé la plus haute des panneaux installés, en descendant sous forme de S entre deux rangées de panneaux jusqu'à la rangée finale située sur la partie la plus basse de l'installation, l'eau pénètre dans les panneaux à travers les trous et mouille le substrat, le feutre ou laine minérale; le surplus d'eau qui atteint par gravité la partie inférieure est récupérée dans une gouttière et transportée au réservoir qui est pourvu d'une pompe, et également d'un dispositif de niveau d'au minimal relié au réseau afin de remplacer l'eau consommée.
